# FASCICULE DE BREVET EUROPEEN

(11) **EP 2 158 478 B1**
(45) Date de publication et mention de la délivrance du brevet: **13.08.2014**
(21) Numéro de dépôt: 08826353.8
(22) Date de dépôt: 16.06.2008
(51) Int. Cl.: G01N 29/06, G01N 29/22, G01N 29/26, G01N 29/265, G01N 29/27

(54) **Procédé et appareil de contrôle non destructif manuel d'axes d'essieu tubulaires à profils de rayons interne et externe variables**
Verfahren und Vorrichtung zur zerstörungsfreien manuellen Inspektion röhrenförmiger Achsbolzen mit variablem Innen- und Aussenradius
Method and apparatus for the manual non-destructive inspection of tubular axle pins having variable inside and outside radius profiles

(30) Priorité: 21.06.2007 FR 0704436
(43) Date de publication de la demande: 03.03.2010
(73) Titulaire: Vallourec Tubes France, 92100 Boulogne-Billancourt (FR)
(72) Inventeur: LESAGE, Frédéric, F-59880 Saint-Saulve (FR); NOËL, Alexandre, F-59530 Englefontaine (FR); NOGUEIRA DE PAULA, Renato, F-59300 Valenciennes (FR)
(74) Mandataire: de Kernier, Gabriel
(86) Numéro de dépôt international: PCT/FR2008/000837
(87) Numéro de publication internationale: WO 2009/010654

(56) Documents cités:
- EP-A- 0 522 922
- WO-A-2006/099397
- FR-A- 1 350 320
- JP-A- 2002 257 798
- US-A- 3 685 350

## Description

L'invention concerne les axes d'essieu, qui sont par exemple utilisés dans le domaine ferroviaire, et plus précisément le contrôle (ou l'inspection) de tels axes au moyen de technique(s) non destructive(s).

Comme le sait l'homme de l'art, certains axes d'essieu, et notamment ceux qui doivent supporter des charges importantes, doivent faire l'objet de contrôles non destructifs à différents stades de fabrication et de maintenance afin de répondre à des standards internationaux. Les procédés de contrôle non destructif connus sont assez bien adaptés aux axes d'essieu pleins (ou massifs). Ils reposent généralement sur une analyse acoustique, au moyen de sondes à ultrasons, cf US A 3 685 350 et FR A 1 350 320 ainsi qu'éventuellement sur une analyse complémentaire, comme par exemple une analyse de surface cf WO 2006/099 397 ou une analyse radiographique. Parmi les standards auxquels doivent satisfaire des axes d'essieu pleins, on peut notamment citer NF EN 13261 - 2004 pour l'Europe, ISO 5948 - 1994 et ISO 6933 - 1986 pour le monde, M 101/90-A pour les Etats-Unis d'Amérique (Association of American Railroads (AAR)), NBR 7947 - 1989 pour le Brésil et JIS E 4502-1 - 2002 pour le Japon.

A partir des données d'analyse acquises, on peut estimer les positions des imperfections et des défauts transversaux ou longitudinaux au sein du matériau plein qui constituent un axe et ainsi déterminer si cet axe satisfait ou non à un standard international (de fabrication ou de maintenance périodique).

Il a été récemment proposé de remplacer certains axes d'essieu pleins (ou massifs) par des axes d'essieu tabulaires dont la paroi présente des profils de rayons extérieur et intérieur variables. Ces nouveaux axes tubulaires sont particulièrement avantageux car ils permettent une réduction notable de poids, typiquement de l'ordre de 30%, et donc une augmentation de la charge transportée, accompagnée d'une diminution de la consommation d'énergie et donc de la pollution. Mais, le contrôle de ce type d'axe tubulaire pose un certain nombre de problèmes.

En effet, en raison de l'existence d'un profil de rayon intérieur variable, il est difficile de différencier les échos résultant de zones anguleuses (ou coins) de ceux résultant d'imperfections ou de défauts structurels.

Par ailleurs, un bon nombre de ces imperfections et/ou défauts présente des dimensions plus petites que celles rencontrées dans un axe plein, ce qui rend leur détection encore plus difficile compte tenu des faibles distances parcourues par les ultrasons.

Enfin, le positionnement dans certaines portions d'un axe tubulaire de certains équipements, tels que notamment les roues (emmanchées à force) et les disques de frein, en vue de constituer un essieu, est également susceptible d'induire des imperfections et/ou des défauts structurels supplémentaires, voire d'amplifier les dimensions de certains défauts structurels et/ou imperfections induits par les opérations précédentes de forgeage à chaud et d'usinage. Il en résulte qu'il est encore plus nécessaire de contrôler ces portions et les zones adjacentes, aussi bien lors du premier assemblage que lors des opérations de maintenance (avec ou sans dépose d'équipement(s) de l'essieu). Or, ces analyses sont difficiles, voire même impossible, à effectuer avec les procédés de contrôle existants cf EP A 0 522 922 dans certaines portions de l'axe, lorsque ce dernier est encombré d'équipements.

L'invention a donc pour but de proposer un procédé et un appareil de contrôle non destructif permettant de contrôler manuellement avec précision la plus grande partie, et si possible la totalité, d'un axe d'essieu tubulaire (ou plus généralement un produit de révolution creux (tubulaire)), y compris lorsque ce dernier est pourvu d'équipements.

Elle propose à cet effet un procédé de contrôle d'axes d'essieu tubulaires comprenant les étapes suivantes :
a) placer manuellement au moins une sonde à ultrasons en un premier endroit qui est choisi sur la surface externe ou interne d'une paroi d'un axe d'essieu tubulaire, cette paroi présentant des profils de rayons extérieur et intérieur variables et connus, et chaque premier endroit étant choisi en fonction de ces profils et des éventuels encombrement et environnement de l'axe, puis analyser avec chaque sonde une première portion choisie de la paroi dans un premier secteur angulaire choisi, orienté suivant un premier sens longitudinal ou transversal, afin d'acquérir des données d'analyse pour différentes positions angulaires relatives de l'axe par rapport à une sonde,
b) replacer manuellement au moins une sonde en un deuxième endroit qui est toujours choisi en fonction des profils et des éventuels encombrement et environnement de l'axe, puis analyser avec chaque sonde replacée une deuxième portion choisie de la paroi dans un deuxième secteur angulaire choisi, orienté suivant un second sens opposé au premier sens, afin d'acquérir d'autres données d'analyse pour différentes positions angulaires relatives de l'axe par rapport à une sonde, et
c) constituer à partir des données d'analyse acquises des cartes représentant les orientations transversales ou longitudinales et les positions d'indications d'échos au sein de la paroi.

On entend ici par « indication d'écho » une information obtenue dans une paroi par réflexion sur une interface (matière/air) ou sur une imperfection ou encore sur un défaut (structurel). Par ailleurs, on entend ici par « imperfection » une partie d'une paroi qui a induit un écho dont l'amplitude est inférieure à un seuil choisi, et donc qui n'est pas de nature à entraîner la mise au rebut de l'axe. Enfin, on entend ici par « défaut » une partie d'une paroi qui a induit un écho dont l'amplitude est supérieure au seuil choisi, et donc qui est de nature à entraîner la mise au rebut de l'axe.

Le procédé selon l'invention peut se décliner selon de nombreuses variantes, dont certaines au moins des caractéristiques peuvent être combinées entre-elles, et notamment :
- on peut par exemple effectuer une première fois les étapes a) à c) en plaçant manuellement chaque sonde à ultrasons sur la surface externe de la paroi afin de constituer des cartes représentatives des positions et orientations des indications d'échos au sein de la paroi, puis on peut effectuer une seconde fois au moins les étapes a) et c) en plaçant manuellement au moins une sonde à ultrasons sur la surface interne de la paroi en un troisième endroit qui est choisi en fonction de ses profils, puis en analysant avec chaque sonde une troisième portion choisie de la paroi dans un troisième secteur angulaire choisi, orienté suivant au moins un sens longitudinal ou transversal choisi, afin d'acquérir des données d'analyse pour différentes positions angulaires relatives de l'axe par rapport à une sonde, et de constituer des cartes représentatives des positions et orientations des indications d'échos au sein de la paroi ;
- on peut par exemple effectuer les étapes a) à c) au moins une fois en plaçant manuellement chaque sonde à ultrasons sur la surface externe ou interne de la paroi afin d'effectuer une analyse ultrasonore dans un secteur angulaire orienté suivant une direction longitudinale, et ainsi constituer des cartes représentatives des orientations transversales et des positions d'indications d'échos au sein de la paroi, puis on peut effectuer de nouveau les étapes a) à c) encore au moins une fois en plaçant manuellement au moins une sonde à ultrasons sur la surface externe ou interne de la paroi afin d'effectuer une analyse ultrasonore dans un secteur angulaire orienté suivant une direction transversale et ainsi constituer des cartes représentatives des orientations longitudinales et des positions d'indications d'échos au sein de la paroi ;
- après avoir effectué une étape c) on peut par exemple prévoir une étape d) dans laquelle on effectue une analyse d'au moins la surface externe de la paroi au moyen d'une autre technique d'analyse, différente de celle basée sur les ultrasons, afin d'acquérir des données d'analyse pour différentes positions angulaires relatives d'au moins une sonde par rapport à l'axe, ainsi qu'une éventuelle étape e) dans laquelle on constitue à partir de ces données d'analyse acquises des cartes représentant les positions et orientations des indications de surface de la paroi ;
   ➢ par exemple, cette autre technique d'analyse peut être choisie parmi la technique dite du flux de fuite et la technique dite des courants de Foucault ;
- après avoir effectué une étape c) on peut prévoir une étape d) dans laquelle on effectue une analyse d'au moins la surface externe de la paroi, au moyen d'une technique dite d'inspection avec des particules magnétisées (ou MPI (pour « Magnetic Particule Inspection »)), afin d'acquérir des données d'analyse de surface pour différentes positions angulaires relatives de l'axe par rapport à une sonde ;
- on peut par exemple analyser chacune des premières, deuxièmes et éventuelles troisièmes portions de la paroi au moyen d'un déplacement longitudinal relatif d'au moins une sonde par rapport à l'axe et/ou au moyen d'un balayage électronique avec au moins une sonde ;
- lors de l'une au moins des étapes a), b) et d) on peut par exemple obtenir les différentes positions angulaires relatives de l'axe par rapport à chaque sonde aux sondes en entraînant en rotation chaque sonde par rapport à cet axe ;
- il peut comprendre une étape f) dans laquelle on compare les données des cartes qui ont été obtenues lors d'une étape c) à des données de premières cartes étalons qui ont été préalablement obtenues sur un premier axe étalon de même type que celui contrôlé, mais dépourvu de défauts, afin de ne retenir que les données qui sont représentatives d'indications d'échos qui ne sont pas présentes dans les premières cartes étalons et ainsi constituer des cartes « corrigées » ;
- il peut comprendre une étape g) dans laquelle on compare les données des cartes qui ont été obtenues lors d'une étape c) ou f) à des données de secondes cartes étalons qui ont été obtenues sur un second axe étalon de même type que celui contrôlé, mais comportant des défauts connus, afin de ne retenir que les données qui sont représentatives d'indications d'échos représentatives de défauts connus présents dans les secondes cartes étalons et ainsi constituer des cartes de défauts ;
- il peut comprendre une étape h) dans laquelle on compare à une amplitude seuil choisie les amplitudes des données des cartes qui ont été obtenues lors d'une étape c) ou f), afin de ne retenir que des données représentatives d'indications d'échos dont les amplitudes sont supérieures à l'amplitude seuil et qui par conséquent signalent des défauts, et ainsi constituer des cartes de défauts ;
   ➢ en cas de détection d'une amplitude supérieure à l'amplitude seuil on peut éventuellement générer une alarme ;
- il peut comprendre une étape i) consistant à afficher au moins une carte sur un écran ;
- on peut par exemple utiliser des sondes capables d'émettre des ultrasons suivant une unique direction d'angle variable ;
   ➢ par exemple l'angle peut varier entre environ 0° et environ 70° par rapport à la direction longitudinale ou transversale ;
- en variante, on peut par exemple utiliser des sondes du type dit à réseau de phase (ou « phased array »), capables d'émettre des ultrasons suivant des directions qui sont comprises dans un secteur angulaire choisi ;
   ➢ par exemple le secteur angulaire peut être compris entre environ 0° et environ 70° par rapport à la direction longitudinale ou transversale.

On notera que les étapes a) à c) doivent se faire dans cet ordre, mais que les autres étapes citées d) à i) ne se font pas forcément dans cet ordre. En particulier, une étape i) peut tout à fait survenir après une étape c).

L'invention propose également un appareil de contrôle d'axes d'essieu destiné à mettre en oeuvre le procédé présenté ci-avant. Cet appareil comprend plus précisément :
- au moins une sonde à ultrasons chargée d'analyser dans un secteur angulaire choisi des portions choisies d'une paroi (présentant des profils de rayons extérieur et intérieur variables et connus) d'un axe d'essieu tubulaire, et ainsi acquérir des données d'analyse,
- des moyens de contrôle chargés de déterminer, en fonction des profils et des éventuels encombrement et environnement de l'axe, au moins un premier et au moins un deuxième endroits choisis sur la surface externe ou interne de la paroi où doit être placée manuellement chaque sonde de sorte qu'elle analyse au moins une première et au moins une deuxième portions choisies de la paroi respectivement dans au moins un premier et au moins un deuxième secteurs angulaires choisis, orientés suivant des premier et second sens longitudinaux ou transversaux opposés, et qu'elle acquière ainsi des données d'analyse pour différentes positions angulaires relatives de l'axe par rapport à elle, et
- des moyens de traitement chargés de constituer à partir des données d'analyse acquises des cartes représentant les orientations transversales ou longitudinales et les positions d'indications d'échos au sein de la paroi.

Cet appareil selon l'invention peut se décliner selon plusieurs variantes, dont certaines au moins des caractéristiques peuvent être combinées entre-elles, et notamment :
- ses moyens de contrôle peuvent être chargés de déterminer un premier déplacement devant être appliqué manuellement à chaque sonde par rapport à la surface externe de la paroi de manière à acquérir des données d'analyse pour différentes positions angulaires relatives de l'axe par rapport à chaque sonde, puis pour déterminer un second déplacement devant être appliqué manuellement à au moins une sonde par rapport à la surface interne de la paroi afin qu'elle analyse au moins une troisième portion choisie de la paroi dans au moins un troisième secteur angulaire choisi, orienté suivant un sens longitudinal ou transversal choisi, et qu'elle acquière ainsi d'autres données d'analyse pour différentes positions angulaires relatives de l'axe par rapport à chaque sonde. Dans ce cas, les moyens de traitement sont chargés de constituer à partir des données d'analyse acquises des cartes représentant les positions et orientations d'indications d'échos au sein de la paroi ;
- ses moyens de contrôle peuvent être chargés i) de déterminer un premier déplacement devant être appliqué manuellement à chaque sonde par rapport à la surface externe ou interne de la paroi de sorte qu'elle effectue une analyse ultrasonore dans un secteur angulaire orienté suivant une direction longitudinale, et qu'elle acquière des données d'analyse à partir desquelles ses moyens de traitement vont constituer des cartes représentatives des orientations transversales et des positions d'indications d'échos, puis ii) de déterminer au moins un second déplacement devant être appliqué manuellement à chaque sonde par rapport à la surface externe ou interne de la paroi afin qu'elle effectue une analyse ultrasonore dans un secteur angulaire orienté suivant une direction transversale et qu'elle acquière des données d'analyse à partir desquelles les moyens de traitement vont constituer des cartes représentatives des orientations longitudinales et des positions d'indications d'échos ;
- il peut comprendre des moyens d'analyse de surface chargés d'analyser au moins la surface externe de la paroi au moyen d'une autre technique d'analyse, différente de celle basée sur les ultrasons, afin d'acquérir des données d'analyse pour différentes positions relatives de l'axe par rapport à une sonde. Dans ce cas, les moyens de traitement sont éventuellement chargés de constituer à partir de ces données d'analyse (acquises par les moyens d'analyse de surface) des cartes représentant les positions et orientations des indications de surface de la paroi ;
   ➢ par exemple les moyens d'analyse de surface sont choisis parmi les moyens d'analyse de flux de fuite et les moyens d'analyse par courants de Foucault ;
- il peut comprendre des moyens d'analyse de surface chargés d'analyser au moins la surface externe de la paroi par inspection avec des particules magnétisées (ou MPI) afin d'acquérir des données d'analyse de surface pour différentes positions relatives de l'axe par rapport à chaque sonde ;
- ses moyens de contrôle peuvent être chargés d'effectuer un balayage électronique avec au moins une sonde pour qu'elle analyse une partie au moins des premières, deuxièmes et éventuelles troisièmes portions de la paroi ;
- ses moyens de traitement peuvent être chargés de comparer les données de cartes obtenues sur l'axe à contrôler à des données de premières cartes étalons qui ont été obtenues sur un premier axe étalon de même type que celui contrôlé, mais dépourvu de défauts, et de ne retenir que les données qui sont représentatives d'indications d'échos qui ne sont pas présentes dans les premières cartes étalons et ainsi constituer des cartes corrigées ;
- ses moyens de traitement peuvent être chargés de comparer les données de cartes obtenues sur l'axe à contrôler à des données de secondes cartes étalons obtenues sur un second axe étalon de même type que celui contrôlé, mais comportant des défauts connus, et de ne retenir que les données représentatives d'indications d'échos représentatives de défauts connus présents dans les secondes cartes étalons et ainsi constituer des cartes de défauts ;
- ses moyens de traitement peuvent être chargés de comparer à une amplitude seuil choisie les amplitudes des données de cartes obtenues sur l'axe à contrôler, et de ne retenir que des données représentatives d'indications d'échos dont les amplitudes sont supérieures à cette amplitude seuil et signalent des défauts, et ainsi constituer des cartes de défauts ;
   ➢ ses moyens de traitement peuvent être chargés de générer une alarme en cas de détection d'une amplitude supérieure à l'amplitude seuil ;
- il peut comprendre un écran propre à afficher certaines au moins des cartes qui ont été constituées par ses moyens de traitement ;
- chaque sonde peut par exemple être chargée d'émettre des ultrasons suivant une unique direction d'angle variable, par exemple entre environ 0° et environ 70° par rapport à la direction longitudinale ou transversale ;
- en variante chaque sonde peut par exemple être du type dit à réseau de phase et être chargée d'émettre des ultrasons suivant des directions comprises dans un secteur angulaire choisi, par exemple compris entre environ 0° et environ 70° par rapport à la direction longitudinale ou transversale.

D'autres caractéristiques et avantages de l'invention apparaîtront à l'examen de la description détaillée ci-après, et des dessins annexés, sur lesquels :
- la figure 1 illustre de façon schématique, dans une vue en coupe longitudinale, un exemple d'axe d'essieu tubulaire dépourvu d'équipemént,
- la figure 2 illustre de façon schématique, dans une vue en coupe longitudinale, une partie d'un exemple d'axe d'essieu tubulaire pourvu d'équipements,
- la figure 3 illustre de façon schématique et fonctionnelle un exemple de réalisation d'un appareil de contrôle selon l'invention,
- les figures 4A et 4B illustrent de façon schématique deux exemples de placement de sonde sur deux endroits choisis différents de la surface externe d'une partie d'une paroi d'axe (dans une vue en perspective), en vue d'une analyse longitudinale,
- la figure 5 illustre de façon schématique un exemple de placement de sonde sur un endroit choisi de la surface externe d'une partie d'une paroi d'axe (dans une vue en perspective), en vue d'une analyse transversale,
- la figure 6 illustre de façon schématique un exemple de placement de sonde sur un endroit choisi de la surface interne d'une partie d'une paroi d'axe (dans une vue en perspective), en vue d'une analyse longitudinale,
- les figures 7A à 7C représentent des premières portions d'une partie d'une paroi couvertes par trois sondes monodirectionnelles déplacées longitudinalement de la droite vers la gauche pour des angles d'émission respectivement égaux à 30°, 45° et 60° orientés selon un premier sens longitudinal,
- les figures 8A à 8C illustrent des deuxièmes portions de la partie de paroi des figures 7A à 7C couvertes par les trois mêmes sondes monodirectionnelles déplacées longitudinalement de la gauche vers la droite pour des angles d'émission respectivement égaux à 30°, 45° et 60° orientés selon un second sens longitudinal,
- les figures 9A et 9B illustrent des premières et deuxièmes portions de la partie de paroi des figures 7A à 7C couvertes par trois sondes à réseau de phase pour des secteurs angulaires compris entre 30° et 70° et respectivement orientés selon des premier et second sens longitudinaux,
- la figure 10 illustre une troisième portion d'une partie d'une paroi couverte par une sonde à réseau de phase placée sur la surface interne, pour un secteur angulaire compris entre 30° et 70° orienté selon un sens longitudinal, et
- les figures 11A et 11B illustrent deux exemples de cartes obtenues sur une même paroi d'un axe d'essieu.

Les dessins annexés pourront non seulement servir à compléter l'invention, mais aussi contribuer à sa définition, le cas échéant.

L'invention a pour but de permettre le contrôle non destructif manuel de la plus grande partie, et si possible la totalité, d'un axe d'essieu tubulaire, y compris lorsque ce dernier est pourvu d'équipements.

On considère dans ce qui suit que les axes tubulaires à contrôler sont destinés à faire partie d'essieux de wagons de transport de marchandise(s) ou de passagers. Mais, l'invention n'est pas limitée à cette application. Elle concerne en effet tout type de produit de révolution creux (tubulaire), soumis à des contraintes en service, comme par exemple des efforts en fatigue, et dont la paroi comprend des profils de rayons extérieur et intérieur variables et connus.

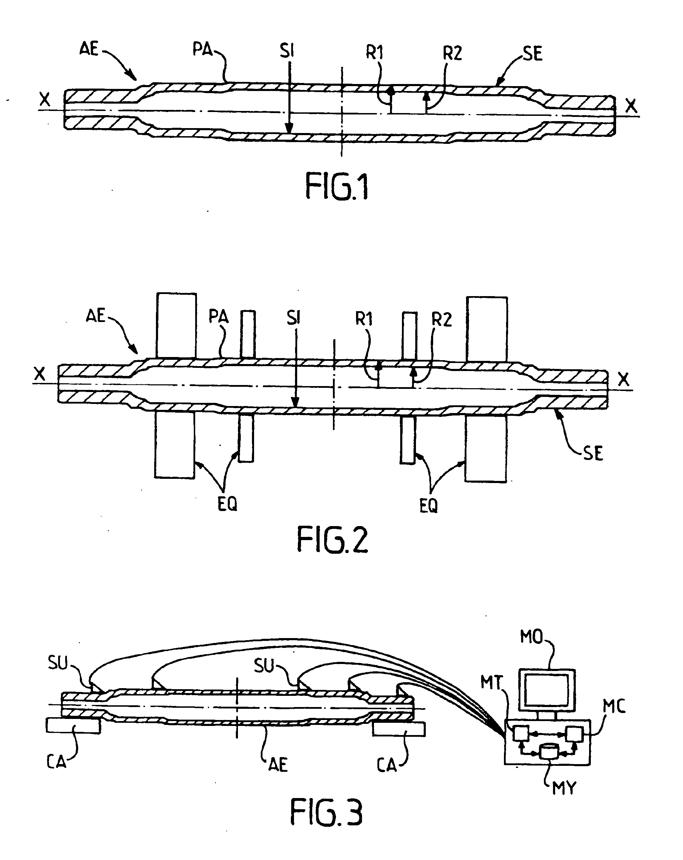

Comme cela est illustré sur la figure 1, un axe (d'essieu) tubulaire AE comprend une paroi PA qui est définie au moyen d'opérations de forgeage à chaud et d'usinage et qui présente au final des profils de rayons extérieur R1 et intérieur R2 variables. On notera que l'épaisseur radiale (c'est-à-dire suivant une direction perpendiculaire à l'axe longitudinal XX) n'est pas forcément constante. En d'autres termes les profils des rayons extérieur R1 et intérieur R2 ne sont pas forcément superposables à une homothétie près.

Le contrôle manuel d'un axe de ce type, qu'il soit dépourvu d'équipements comme dans l'exemple de la figure 1, ou qu'il soit pourvu d'équipements EQ (tels que notamment des roues et/ou des disques de frein) comme dans l'exemple de la figure 2, voire même qu'il soit monté sur un wagon, se fait au moyen d'un appareil de contrôle du type de celui illustré schématiquement et fonctionnellement sur la figure 3.

Un tel appareil comprend au moins une sonde à ultrasons SU (ici cinq sont représentées), un module de contrôle MC et un module de traitement MT, ainsi que de préférence un écran EC. On notera que le module de contrôle MC, le module de traitement MT et l'écran EC peuvent faire partie d'un micro-ordinateur (ou d'une station de travail) MO connecté aux sondes SU, comme illustré à titre d'exemple non limitatif sur la figure 3. Dans ce qui suit on considère que l'appareil comprend au moins deux sondes SU.

Lorsque l'axe d'essieu AE à contrôler n'est pas monté sur un wagon (comme illustré sur la figure 3), il peut par exemple être déposé sur des cales CA (ou tout moyen de support adapté à cet effet), avec ou sans ses équipement(s).

Les sondes à ultrasons SU peuvent être soit agencées de manière à émettre des ultrasons suivant une unique direction dont l'angle est choisi mais peut varier en fonction des besoins, soit du type dit à réseau de phase (ou « phased array »), c'est-à-dire agencées de manière à émettre des ultrasons suivant plusieurs directions comprises dans un secteur angulaire choisi en fonction des besoins (grâce à un balayage angulaire électronique). On peut également obtenir l'équivalent d'un déplacement longitudinal du capteur au moyen d'un balayage électronique.

Dans le premier cas (monodirectionnel), chaque sonde SU comprend un unique élément de détection chargé de recevoir les échos provenant de la paroi PA objet de l'analyse. Dans le second cas (sonde à réseau de phase), chaque sonde SU comprend plusieurs éléments de détection chargés de recevoir les échos provenant de la paroi PA objet de l'analyse après réfraction et/ou réflexions (éventuellement multiples) sous différents angles. Il est rappelé que les éléments de détection sont généralement réalisés dans un matériau composite et placés sur des transducteurs. Lorsque les éléments de détection d'une sonde sont excités, ils produisent un faisceau d'analyse divergent. La forme de ce dernier et donc sa direction générale d'incidence peuvent être modifiées électroniquement en introduisant des retards temporels au niveau des instants d'excitation d'éléments de détection choisis d'une sonde. On appelle généralement « sonde virtuelle » la combinaison d'éléments de détection d'une sonde et des éventuels retards temporels associés qui sont utilisés pour produire un faisceau d'analyse dans une direction générale donnée. Une sonde à réseau de phase peut ainsi constituer plusieurs (par exemple plusieurs dizaines) sondes virtuelles en fonction des combinaisons dont elle fait l'objet. La fréquence d'excitation des transducteurs est typiquement de l'ordre de quelques mégahertz (2 à 5 MHz). Lorsqu'ils ne sont pas excités en émission, ces mêmes éléments de détection servent à la détection des échos provenant des interfaces matière/air ou matière/liquide, des imperfections et des défauts. Ils constituent ainsi des capteurs de type émetteur/récepteur.

Les profils de rayons interne R2 et externe R1 que présente la paroi PA et les éventuels encombrement et environnement de l'axe AE sont analysés, par exemple au moyen d'un logiciel de simulation de type CIVA 8.0 (développé et commercialisé par le Commissariat à l'Energie Atomique (CEA)), de manière à déterminer le nombre de sondes SU qui vont être nécessaires pour analyser l'intégralité ou une partie choisie seulement de l'axe AE, compte tenu de leur type (monodirectionnel ou à réseau de phase (et dans ce second cas de leur nombre d'éléments de détection)) et du fait qu'elles peuvent être orientées de manière à effectuer des analyses longitudinales ou transversales selon des premier et second sens opposés.

On entend ici par « analyse longitudinale » une analyse effectuée en vue de rechercher des défauts et/ou des imperfections orientés préférentiellement longitudinalement ou selon un faible angle aiguë par rapport à la direction longitudinale XX (angle aiguë typiquement inférieur à ±25°, et de préférence inférieur à ±5°). On emploie parfois le terme d'obliquité pour désigner cette orientation du défaut. Cette analyse est effectuée au moyen d'un faisceau émis suivant une direction perpendiculaire à la direction longitudinale XX, c'est-à-dire dont la direction générale est sensiblement contenue dans un plan perpendiculaire à la direction longitudinale XX ou bien qui fait un faible angle aiguë (typiquement inférieur à ±10°) avec cette direction perpendiculaire.

Par ailleurs, on entend ici par « analyse transversale » une analyse effectuée en vue de rechercher des défauts et/ou des imperfections orientés préférentiellement transversalement ou selon un faible angle aiguë par rapport à un plan perpendiculaire à la direction longitudinale XX (angle aiguë typiquement inférieur à ±25°, et de préférence inférieur à ±5°). On emploie parfois le terme d'obliquité pour désigner cette orientation du défaut. Cette analyse est effectuée au moyen d'un faisceau émis suivant une direction parallèle à la direction longitudinale XX, c'est-à-dire dont la direction générale est sensiblement contenue dans un plan qui contient lui-même la direction longitudinale XX ou bien qui fait un faible angle aiguë (typiquement inférieur à ±10°) avec cette direction longitudinale.

En outre, on entend ici par « environnement de l'axe » le contenu de l'espace qui l'entoure lorsqu'il doit être contrôlé. On comprendra en effet que lorsque l'on doit contrôler un axe AE qui est monté sur un wagon, lui-même placé sur des rails, les portions que l'on peut contrôler peuvent être notablement réduites.

Compte tenu des formes des profils des rayons interne R2 et externe R1 que présente habituellement la paroi PA des axes AE et des éventuels encombrement et environnement de ces derniers, l'angle d'émission d'une sonde SU monodirectionnelle doit généralement pouvoir varier entre environ 0° et environ 70° par rapport à la direction longitudinale XX, et le secteur angulaire d'émission d'une sonde SU à réseau de phase doit généralement être compris entre environ 0° et environ 70° par rapport à la direction longitudinale XX.

Une fois que le module de contrôle MC a déterminé pour chaque sonde SU le (premier) endroit choisi où elle va devoir être initialement et manuellement placée relativement à l'axe AE de manière à analyser une première portion choisie de la paroi PA dans un premier secteur angulaire choisi, orienté suivant un premier sens longitudinal ou transversal, ainsi que l'éventuel (second) endroit choisi où elle va devoir être ultérieurement et manuellement placée relativement à l'axe AE de manière à analyser une deuxième portion choisie de la paroi PA dans un deuxième secteur angulaire choisi, orienté suivant un second sens longitudinal ou transversal opposé au premier sens, on peut placer manuellement les sondes SU en leurs premiers endroits choisis respectifs.

Ce placement manuel des sondes SU relativement à l'axe AE peut se faire en des premiers endroits choisis qui sont situés soit sur la surface externe SE de la paroi PA, soit sur la surface interne SI de cette paroi PA, selon les besoins (et la configuration de l'axe AE). On peut par exemple commencer par effectuer des analyses par ultrasons en plaçant des sondes SU sur la surface externe SE de la paroi PA, puis éventuellement compléter ces analyses en plaçant ensuite des sondes SU sur la surface interne SI de la paroi PA (c'est-à-dire à l'intérieur de l'axe tubulaire AE). Mais l'inverse est également possible.

Le couplage entre les sondes SU et la surface interne SI ou externe SE d'une paroi PA peut se faire par tout moyen connu de l'homme de l'art, et notamment au moyen de glycérine ou par immersion dans de l'eau de préférence mélangée avec un produit anticorrosif.

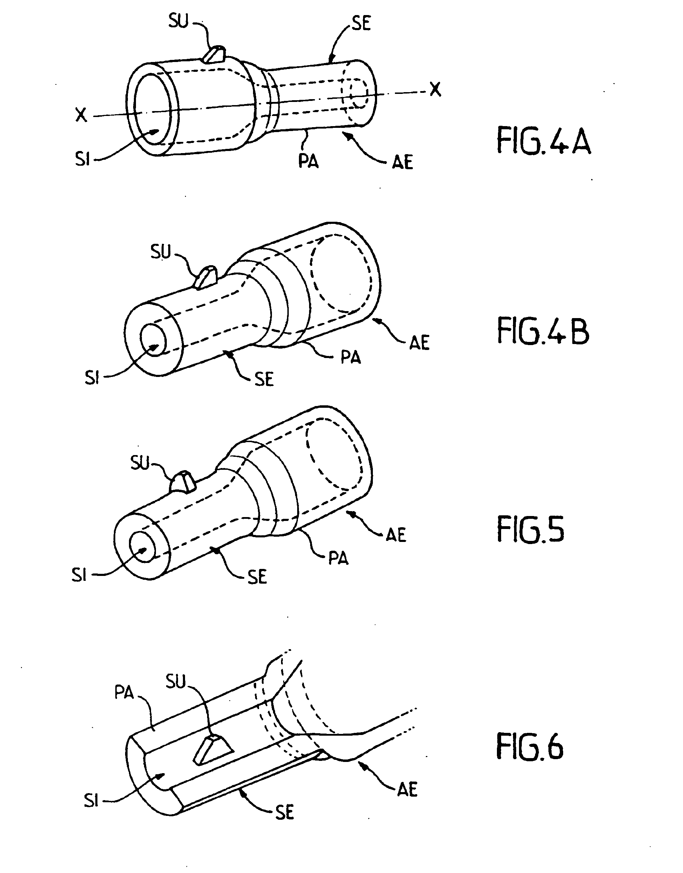

On a représenté sur les figures 4A et 4B deux exemples de placement d'une sonde SU en deux endroits choisis de la surface externe SE d'une partie d'une paroi PA d'axe AE, en vue d'une analyse longitudinale. On a également représenté sur la figure 5 un exemple de placement d'une sonde SU en un endroit choisi de la surface externe SE d'une partie d'une paroi PA d'axe AE, en vue d'une analyse transversale. On a également représenté sur la figure 6 un exemple de placement d'une sonde SU en un endroit choisi de la surface interne SI d'une partie d'une paroi PA d'axe AE, en vue d'une analyse longitudinale.

Il est important de noter qu'une sonde SU peut analyser une portion qui lui a été attribuée soit en étant maintenue au niveau d'un endroit choisi, soit en étant déplacée manuellement par un technicien, longitudinalement et/ou transversalement, entre une position de départ (correspondant à l'endroit initialement choisi) et une position de fin (correspondant à un autre endroit choisi), éventuellement via une ou plusieurs positions intermédiaires (correspondant chacune à un autre endroit choisi).

Au lieu de déplacer manuellement certaines sondes SU, ou bien en complément d'un tel déplacement, elles peuvent être utilisées en mode de balayage électronique, sous le contrôle du module de contrôle MC, pour analyser une partie au moins des portions d'une paroi PA. Il est rappelé qu'un balayage électronique est obtenu pour une sonde SU en utilisant certains de ces éléments de détection situés à des emplacements choisis de son réseau de phase et en attribuant des délais choisis à ces éléments de détection choisis de sorte qu'ils émettent séquentiellement. Ce mode de déplacement « électronique » est avantageux car il évite d'avoir à déplacer manuellement une sonde SU.

Le module de contrôle MC est chargé de déterminer, en fonction des profils interne et externe de l'axe AE à contrôler et des éventuels encombrement et environnement de ce dernier, au moins des premiers et deuxièmes endroits choisis sur la surface externe SE ou interne SI de la paroi PA où doivent être placées manuellement les sondes SU afin qu'elles analysent des premières et deuxièmes portions choisies de la paroi PA respectivement dans des premiers et deuxièmes secteurs angulaires choisis, orientés suivant des premier et second sens longitudinaux (direction XX) ou transversaux (direction perpendiculaire à la direction XX) opposés, et qu'elles acquièrent ainsi des données d'analyse pour différentes positions angulaires relatives de l'axe AE par rapport aux sondes SU.

On notera que la solution utilisée pour analyser toute une portion de paroi PA choisie dépend du type de sonde SU disponible et en outre, dans le cas de sondes à réseau de phase, du nombre d'éléments de détection qui les constituent. En effet, on comprendra que si le nombre d'éléments de détection d'une sonde SU est adapté à la couverture de la portion de paroi PA qui lui a été attribuée, il est inutile de prévoir un déplacement longitudinal manuel car on peut lui substituer un balayage électronique. A titre d'exemple, si une sonde SU doit couvrir une portion de paroi PA d'extension longitudinale égale à 100 mm, alors elle doit comporter au moins 200 éléments de détection de 0,5 mm de côté, par exemple séparés deux à deux d'une distance égale à environ 0,1 mm. Il est rappelé que plus les dimensions des éléments de détection sont petites, plus les secteurs angulaires d'analyse peuvent être larges. Un compromis peut être trouvé entre le nombre d'éléments de détection des sondes SU et les possibilités d'extension de couverture offertes par le balayage électronique, de manière à éviter les déplacements longitudinaux manuels.

On notera également que l'utilisation de sondes à réseau de phase est plus avantageuse que celle de sondes monodirectionnelles car elle permet d'obtenir une meilleure continuité sur un même secteur angulaire d'analyse tout en évitant tout déplacement angulaire de la source d'ultrasons.

Selon l'invention, une fois que les sondes SU ont été placées manuellement sur la surface externe SE ou interne SI d'une paroi PA en des premiers endroits (choisis en fonction de ses profils et des éventuels encombrement et environnement de l'axe AE), chacune de ces sondes SU procède à l'analyse de la première portion de la paroi PA, qui a été déterminée pour elle par le module de contrôle MC, dans un premier secteur angulaire choisi qui est orienté suivant un premier sens longitudinal ou transversal. Chaque sonde SU peut ainsi acquérir des données d'analyse pour la position angulaire courante relative de l'axe AE par rapport à ladite sonde SU. En déplaçant angulairement les sondes SU par rapport à l'axe AE sur des secteurs angulaires successifs choisis, chaque sonde SU peut effectuer une nouvelle acquisition de données d'analyse après chaque déplacement angulaire. On peut ainsi disposer de données d'analyse relatives à l'intégralité de la circonférence de chaque première portion de paroi PA inspectée.

Ces données d'analyse comprennent par exemple les angles d'émission, les instants d'émission et de réception des ultrasons (ou ce qui est équivalent les intervalles temporels entre les instants d'émission et de réception), et les angles de réception. Elles sont par exemple transmises par les sondes SU au module de contrôle MC qui se charge de les stocker dans une mémoire MY en correspondance des positions longitudinales et angulaires des premières portions inspectées par rapport à un référentiel choisi, ainsi qu'éventuellement de l'identifiant de la sonde SU utilisée pour les obtenir.

Ensuite, certaines au moins des sondes SU sont replacées manuellement sur la surface externe SE ou interne SI de la paroi PA en des deuxièmes endroits (choisis en fonction de ses profils et des éventuels encombrement et environnement de l'axe AE) afin qu'elles procèdent à l'analyse des deuxièmes portions de la paroi PA qui leur ont été respectivement attribuées, dans des deuxièmes secteurs angulaires choisis qui sont orientés suivant un second sens longitudinal ou transversal, opposé au premier sens.

Par exemple, si le premier sens correspond à un sens allant de la gauche vers la droite de l'axe longitudinal XX, alors le second sens correspond à un sens allant de la droite vers la gauche dudit axe longitudinal XX. De même, si le premier sens correspond à un sens allant de la gauche vers la droite d'un second axe perpendiculaire à l'axe longitudinal XX, alors le second sens correspond à un sens allant de la droite vers la gauche dudit second axe.

Chaque sonde SU replacée manuellement peut ainsi acquérir des données d'analyse pour sa position angulaire courante par rapport à l'axe AE. En déplaçant angulairement les sondes SU par rapport à l'axe AE sur des secteurs angulaires choisis, chaque sonde SU peut effectuer une nouvelle acquisition de données d'analyse après chaque déplacement angulaire. On peut ainsi disposer de données d'analyse relatives à l'intégralité de la circonférence de chaque deuxième portion de paroi PA inspectée. Ces données d'analyse sont par exemple transmises par les sondes SU au module de contrôle MC qui se charge de les stocker dans une mémoire en correspondance des positions longitudinales et angulaires des deuxièmes portions inspectées par rapport à un référentiel choisi, ainsi qu'éventuellement de l'identifiant de la sonde SU utilisée pour les obtenir.

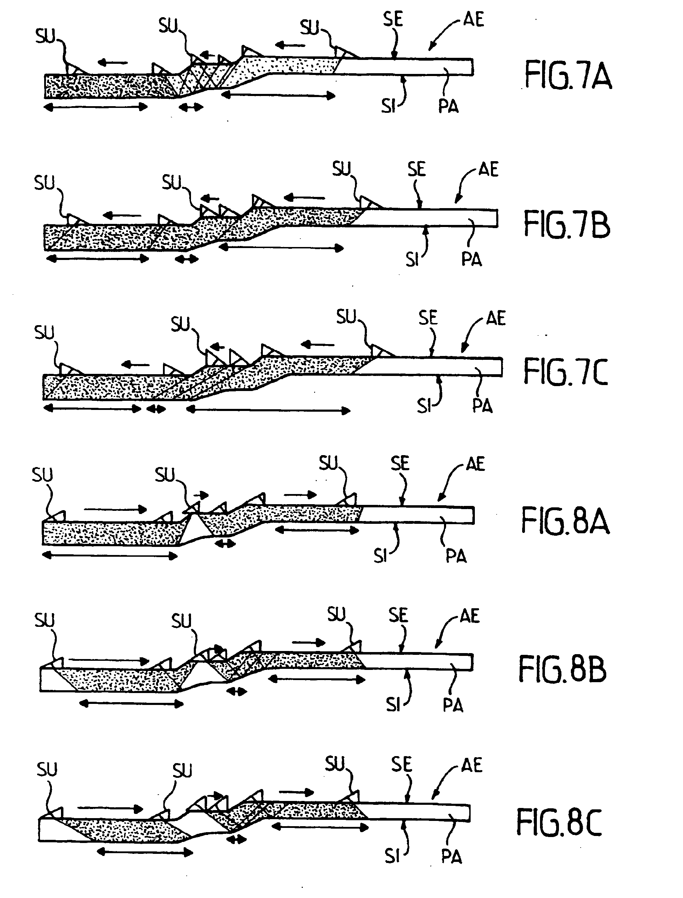

Grâce à cette double analyse selon des sens opposés, on peut inspecter tout ou partie d'un axe d'essieu AE (selon les besoins), comme cela ressort des figures 7 à 10. Plus précisément :
- les figures 7A à 7C représentent les premières portions d'une partie d'une paroi qui peuvent être couvertes par trois sondes monodirectionnelles, placées sur la surface externe SE et déplacées longitudinalement de la droite vers la gauche, pour des angles d'émission respectivement égaux à 30°, 45° et 60° orientés selon un premier sens longitudinal (allant de la droite vers la gauche),
- les figures 8A à 8C représentent les deuxièmes portions de cette même partie de paroi qui peuvent être couvertes par les trois mêmes sondes monodirectionnelles, placées sur la surface externe SE et déplacées longitudinalement de la gauche vers la droite, pour des angles d'émission respectivement égaux à 30°, 45° et 60° orientés selon un second sens longitudinal (allant de la gauche vers la droite),

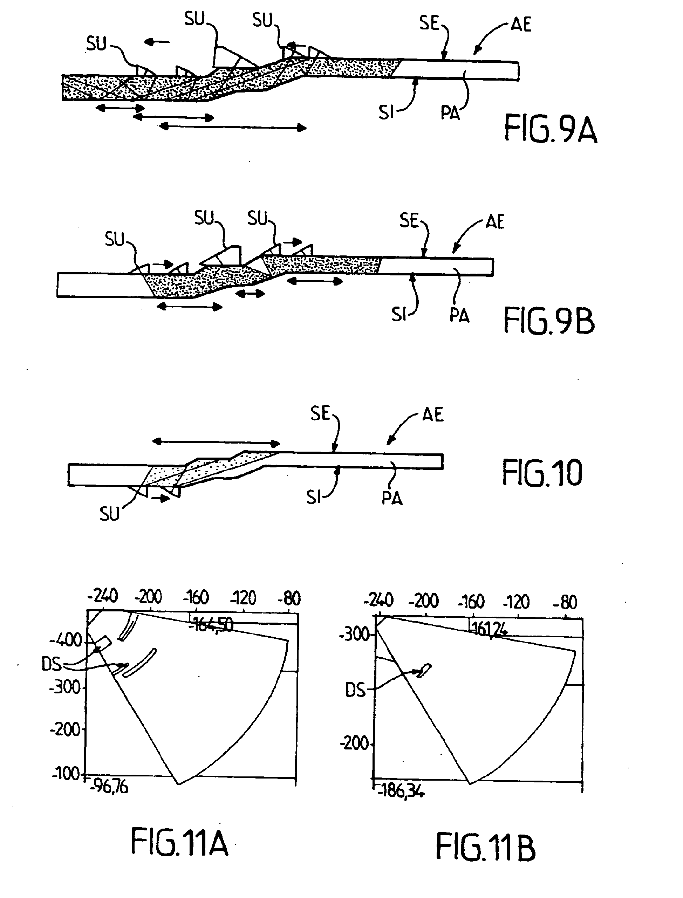

- la figure 9A représente les premières portions de cette même partie de paroi qui peuvent être couvertes par trois sondes à réseau de phase, placées sur la surface externe SE, pour un secteur angulaire compris entre 30° et 70° orienté selon un premier sens longitudinal (allant de la droite vers la gauche),
- la figure 9B représente les deuxièmes portions de cette même partie de paroi qui peuvent être couvertes par les trois mêmes sondes à réseau de phase, placées sur la surface externe SE, pour un secteur angulaire compris entre 30° et 70° orienté selon un second sens longitudinal (allant de la gauche vers la droite), et
- la figure 10 représente les troisièmes portions de cette même partie de paroi qui peuvent être couvertes par une sonde à réseau de phase, placée sur la surface interne SI, pour un secteur angulaire compris entre 30° et 70° orienté selon un sens longitudinal (allant de la gauche vers la droite).

Compte tenu des formes des profils des rayons interne R2 et externe R1 que présente habituellement la paroi PA des axes AE et des éventuels encombrement et environnement de ces derniers, l'angle d'émission d'une sonde SU monodirectionnelle doit généralement pouvoir varier entre environ 0° et environ 70° par rapport à la direction longitudinale XX ou transversale, et le secteur angulaire d'émission d'une sonde SU à réseau de phase doit généralement être compris entre environ 0° et environ 70° par rapport à la direction longitudinale XX ou transversale.

Sur les exemples des figures 7 à 10 chaque flèche à double sens matérialise l'extension longitudinale de la (première) portion analysée par une sonde SU (placée au dessus). On comprendra que l'encombrement et/ou l'environnement d'un axe d'essieu AE rédui(sen)t notablement, dans certaines de ses parties, les extensions longitudinales des portions qui peuvent être techniquement analysées (couvertes) par une même sonde SU. C'est en particulier le cas dans les parties qui sont situées sous les roues, lesquelles ont une probabilité plus importante de comporter des défauts structurels induits par l'emmanchement à force et/ou par les charges supportées, et donc doivent faire l'objet d'une inspection (analyse) la plus précise possible et la plus complète possible.

Les données d'analyse stockées sont extraites par le module de traitement MT, qui se charge alors de les regrouper en fonction des zones d'axe qu'elles concernent de manière à constituer des cartes qui représentent les orientations transversales ou longitudinales et les positions d'indications d'échos au sein de la paroi PA.

Il est rappelé que les indications d'échos résultent d'une réflexion soit sur une interface matière/air ou matière/liquide, soit sur une imperfection, soit encore sur un défaut.

Il est également rappelé que les analyses longitudinales sont plus particulièrement adaptées à la détection d'imperfections et de défauts transversaux (qui sont généralement les plus fréquents), tandis que les analyses transversales sont plus particulièrement adaptées à la détection d'imperfections et de défauts longitudinaux.

Le fait d'inspecter des matériaux selon deux sens opposés et donc selon des directions d'analyse très différentes permet de détecter des imperfections et des défauts de plus petites dimensions, et donc un plus grand nombre d'imperfections et de défauts qu'avec les procédés et appareils de contrôle de l'art antérieur adaptés aux axes pleins (ou massifs). Mais cela permet également une bonne détection des imperfections et des défauts obliques et inclinés (ou « tiltés ») à l'intérieur de la paroi PA.

On notera que le module de traitement MT peut éventuellement être agencé de manière à effectuer des « corrélations » entre données d'analyse relatives à des zones identiques constituant les zones de recouvrement de première(s) et/ou deuxième(s) portions de paroi. Ils peuvent ainsi constituer des cartes « brutes » de ces zones de recouvrement, éventuellement de type tridimensionnel (3D).

Les fichiers de données constituant les cartes brutes sont de préférence stockés dans une mémoire MY. Ces cartes peuvent alors être soit affichées de façon individualisée (les unes après les autres) ou de façon groupée (plusieurs en même temps) sur l'écran EC en vue d'une analyse par un technicien, soit d'abord analysées de façon automatisée, puis converties en cartes « corrigées » ou cartes « de défauts » qui peuvent être affichées sur l'écran EC de façon individualisée ou de façon groupée.

Plusieurs types d'analyses comparatives peuvent être effectuées sur les cartes « brutes ».

Par exemple, le module de traitement MT peut être chargé de comparer les données de certaines au moins des cartes, qui ont été obtenues sur un axe AE à contrôler, à des données de premières cartes étalons qui ont été obtenues sur un premier axe étalon du même type que celui contrôlé, mais dépourvu de défauts. Dans ce cas, le module de traitement MT ne retient que les données qui sont représentatives d'indications d'échos qui ne sont pas présentes dans les premières cartes étalons, afin de constituer des cartes corrigées qu'il stocke dans la mémoire MY.

En variante ou en complément, le module de traitement MT peut être chargé de comparer les données de certaines au moins des cartes (brutes ou corrigées) qui ont été obtenues sur un axe AE à des données de secondes cartes étalons qui ont été obtenues sur un second axe étalon de même type que celui contrôlé, mais comportant des défauts connus. Dans ce cas, le module de traitement MT ne retient que les données qui sont représentatives d'indications d'échos représentatives de défauts connus présents dans les secondes cartes étalons, afin de constituer des cartes de défauts qu'il stocke dans la mémoire MY.

En variante ou en complément, le module de traitement MT peut être chargé de comparer à une amplitude seuil choisie les amplitudes des indications d'échos représentées sur certaines au moins des cartes. Dans ce cas, le module de traitement MT ne retient que les données qui sont représentatives d'indications d'échos dont les amplitudes sont supérieures à l'amplitude seuil choisie et qui de ce fait sont censées être issues de défauts, afin de constituer des cartes de défauts.

Par ailleurs, on peut également envisager que le module de traitement MT génère une alarme (sonore et/ou visuelle (affichée sur l'écran EC)) chaque fois qu'il détecte qu'une amplitude est supérieure à l'amplitude seuil choisie.

On a représenté sur les figures 11A et 11B deux exemples de cartes brutes obtenues sur une même paroi PA d'axe d'essieu AE. Les défauts structurels détectés sont référencés DS.

Comme indiqué précédemment, on peut analyser une paroi PA en plaçant manuellement les sondes SU sur sa surface externe SE ou bien sur sa surface interne SI. Mais, on peut également envisager d'effectuer une double analyse, par exemple en commençant par placer manuellement les sondes SU sur sa surface externe SE puis en plaçant manuellement certaines des sondes SU sur sa surface interne SI. Plus précisément, dans ce cas on place manuellement les sondes SU sur la surface externe SE de la paroi PA en des premiers endroits choisis et on analyse avec ces sondes SU des premières portions choisies de la paroi PA dans des premiers secteurs angulaires choisis, orientés suivant un premier sens longitudinal (ou transversal), afin d'acquérir des données d'analyse pour différentes positions angulaires des sondes SU par rapport à l'axe AE. Puis, on replace manuellement certaines au moins des sondes SU sur la surface externe SE de la paroi PA en des deuxièmes endroits choisis et on analyse avec ces sondes SU des deuxièmes portions choisies de la paroi PA dans des deuxièmes secteurs angulaires choisis, orientés suivant un second sens longitudinal (ou transversal), opposé au premier, afin d'acquérir des données d'analyse pour différentes positions angulaires des sondes SU par rapport à l'axe AE. Enfin, on place manuellement certaines au moins des sondes SU sur la surface interne SI de la paroi PA en des troisièmes endroits choisis et on analyse avec ces sondes SU des troisièmes portions choisies de la paroi PA dans des troisièmes secteurs angulaires choisis, orientés suivant au moins un sens longitudinal (ou transversal), voire même deux sens opposés, afin d'acquérir des données d'analyse pour différentes positions angulaires des sondes SU par rapport à l'axe AE.

Le module de traitement MT constitue alors, à partir de l'ensemble des données d'analyse, des cartes représentatives des positions et orientations des indications d'échos au sein de la paroi PA.

Cette double analyse par l'extérieur et par l'intérieur peut permettre de couvrir la totalité des portions d'une paroi PA à inspecter, alors que cela peut s'avérer impossible au moyen de la seule analyse par l'extérieur, du fait des profils de cette paroi PA et/ou de l'encombrement et/ou l'environnement de l'axe AE.

Il est également possible d'effectuer une première analyse longitudinale dans les deux sens (comme indiqué ci-dessus) et par l'extérieur (ou l'intérieur), puis une seconde analyse transversale dans au moins un sens et par l'extérieur (ou par l'intérieur), de manière à constituer des cartes représentatives des orientations transversales et des positions d'indications d'échos au sein de la paroi PA et des cartes représentatives des orientations longitudinales et des positions d'indications d'échos au sein de cette même paroi PA.

Il est également possible d'effectuer une première analyse longitudinale dans les deux sens et par l'extérieur, puis une seconde analyse transversale dans au moins un sens et par l'intérieur.

Il est également possible d'effectuer une première analyse transversale dans les deux sens et par l'intérieur, puis une seconde analyse dans au moins un sens et par l'extérieur.

D'unè manière générale, toutes les combinaisons d'analyses longitudinale(s) et transversale(s) par l'intérieur et par l'extérieur peuvent être envisagées.

On notera que les analyses par l'intérieur peuvent dans certains cas nécessiter un réalésage au moins des extrémités de l'axe d'essieu tubulaire AE, de manière à permettre le placement d'au moins une sonde SU à l'intérieur de cet axe AE, contre la surface interne SI de sa paroi PA, ainsi que son éventuel déplacement manuel.

On notera également que les endroits de placement des sondes SU, les différents angles ou différents secteurs angulaires d'analyse par ultrasons de chacune des sondes SU et les portions de paroi attribuées aux différentes sondes peuvent être éventuellement déterminées par le module de contrôle MC en fonction de contrainte(s). Ainsi, on peut envisager qu'une partie d'un contrôle soit faite avec un faisceau dont la direction générale est sensiblement contenue dans un plan qui contient lui-même la direction longitudinale XX et sur des portions de paroi présentant deux à deux des taux de recouvrement choisis, par exemple 50%, et/ou qu'une partie d'un contrôle soit faite avec des faisceaux successifs dont les directions générales sont sensiblement contenues dans des plans qui font des angles aiguës avec cette direction longitudinale XX qui croissent entre 0° et +20° et entre 0° et -20°. Par ailleurs, l'angle d'inclinaison des éléments de détection d'une sonde SU peut être choisi en fonction des besoins. A titre d'exemple non limitatif, un angle de 45° par rapport à la direction longitudinale XX peut être choisi.

On notera également, comme le sait l'homme de l'art, que le gain de chaque transducteur doit faire l'objet d'un ajustement pendant une phase de calibration, par exemple pour que l'amplitude du signal obtenu sur le premier écho provenant d'une interface de la paroi PA corresponde à une amplitude égale par exemple à environ 50% de la dynamique totale d'amplitude utilisée pour les cartes.

Par ailleurs, la phase de calibration comporte également de préférence une première partie dédiée à l'obtention des cartes étalons précitées, qui sont représentatives des résultats d'analyses par ultrasons effectuées sur un axe d'essieu tubulaire étalon du même type que ceux devant faire l'objet d'un contrôle, mais sain (c'est-à-dire dépourvu d'imperfections et de défauts structurels). Cette première partie de la phase de calibration permet en effet de connaître à l'avance les échos qui sont induits par la géométrie de la paroi PA (et notamment les coins et plus généralement les zones dans lesquelles le rayon intérieur R2 ou extérieur R1 varie de façon importante) et ainsi de les différencier de ceux qui sont induits par les imperfections et défauts structurels dans les axes d'essieu tubulaires AE à contrôler.

De même, la phase de calibration peut également comporter une seconde partie dédiée à l'obtention des cartes étalons précitées, qui sont représentatives des résultats d'analyses par ultrasons effectuées sur un axe d'essieu tubulaire étalon du même type que ceux devant faire l'objet d'un contrôle, mais lequel étalon comprend des défauts structurels ou artificiels caractéristiques (comme par exemple des encoches ou cavités caractéristiques) définis en des endroits choisis. Ces défauts structurels ou artificiels caractéristiques sont définis selon un cahier des charges et/ou des normes qui fixent un seuil de tri entre des imperfections et des défauts. Lorsque l'amplitude du signal provenant des échos sur des défauts naturels est inférieure au seuil de tri on est en présence d'une imperfection. Dans le cas contraire (supérieure au seuil) on est en présence d'un défaut. Cette seconde partie de la phase de calibration permet en effet de connaître à l'avance les échos qui sont induits par des défauts structurels ou artificiels caractéristiques et ainsi de pouvoir plus facilement détecter dans les cartes, par comparaison à un seuil de tri, les « objets » qui induisent des échos (ou signatures) de types similaires dans les axes d'essieu tubulaires AE à contrôler.

Une fois que l'on a terminé l'analyse longitudinale et/ou transversale par ultrasons d'un axe d'essieu tubulaire AE, il est ensuite possible d'effectuer manuellement au moins une analyse complémentaire d'un autre type. Par exemple, on peut effectuer une analyse de la surface externe SE de la paroi PA afin d'acquérir des données d'analyse de surface pour différentes positions relatives de l'axe AE par rapport aux moyens d'analyse de surface.

Parmi les techniques d'analyse de surface qui peuvent être utilisées, on peut notamment citer celle dite du flux de fuite et celle dite des courants de Foucault. Certaines de ces techniques sont avantageuses du fait qu'elles fournissent des données d'analyse de surface à partir desquelles on peut réaliser des cartes représentatives des positions et orientations des défauts de surface de la paroi PA. Les fichiers de données constituant ces cartes de défauts de surface sont de préférence stockés dans une mémoire MY afin que lesdites cartes de défauts de surface puissent être affichées de façon individualisée (les unes après les autres) ou de façon groupée (plusieurs en même temps), éventuellement avec des cartes de défauts structurels (obtenues par ultrasons), sur l'écran EC en vue d'une analyse par un technicien et/ou d'une confrontation aux cartes obtenues avec les sondes SU. Cela peut également permettre une comparaison automatique par l'appareil de cartes de défauts de surface et de cartes obtenues par ultrasons.

On notera que l'on peut également effectuer une analyse de surface de type MPI (« Magnetic Particle Inspection » - inspection avec des particules magnétisées). Il est rappelé que cette technique consiste à recouvrir la surface externe SE d'une paroi PA paroi PA au moyen de particules magnétiques et d'un révélateur, puis à magnétiser la paroi à inspecter, puis à observer (avec les yeux) de manière visuelle sous une lumière UV (ultra-violette) les irrégularités d'orientation de ces particules magnétiques, irrégularités d'orientation liées à la présence de défauts ou d'imperfections. L'inconvénient de cette technique d'analyse de surface réside dans le fait qu'elle ne permet pas, aujourd'hui, de fournir des cartes de défauts de surface, et donc qu'elle repose exclusivement sur l'observation visuelle du technicien effectuant le contrôle de l'axe AE, et nécessite ensuite une comparaison visuelle et non automatique avec les cartes obtenues par ultrasons. On est alors tributaire de l'interprétation de l'opérateur et de ses aléas.

On notera également que les cartes dont il a été question ci-avant peuvent être de tout type connu de l'homme de l'art, et notamment de type A-Scan, B-Scan, C-Scan, D-Scan, S-Scan (ou Sector Scan). A titre d'exemple purement illustratif, on peut par exemple constituer des cartes de type S-Scan (qui fournissent des indications de localisation dans le volume - une carte pour chaque position d'une sonde).

Grâce à l'invention, il est possible de détecter des imperfections et des défauts d'environ 2 mm d'épaisseur (c'est-à-dire d'environ 5% de l'épaisseur nominale de la paroi PA dans la direction radiale), d'environ 5 mm de long et d'environ 1 mm de large. Par ailleurs, des imperfections et des défauts longitudinaux et transversaux présentant une obliquité selon des angles aigus typiquement inférieurs à ±25° et de préférence inférieurs à ±5° peuvent être détectés. En outre, des cavités (ou « flaws ») longitudinales ou transversales présentant des angles de désorientation (ou « tilt angles ») pouvant aller jusqu'à environ 60° peuvent être détectés.

L'invention ne se limite pas aux exemples de procédé et d'appareil de contrôle d'axes d'essieu tubulaires décrits ci-avant, seulement à titre d'exemple, mais elle englobe toutes les variantes que pourra envisager l'homme de l'art dans le cadre des revendications ci-après.

## Revendications

1. Procédé de contrôle d'axes d'essieu au moyen de sondes à ultrasons, **caractérisé en ce qu'**il comprend les étapes suivantes :
a) placer manuellement au moins une sonde à ultrasons (SU) en un premier endroit qui est choisi sur la surface externe (SE) ou interne (SI) d'une paroi (PA) d'un axe d'essieu tubulaire (AE), ladite paroi (PA) présentant des profils de rayons extérieur et intérieur variables et connus, et chaque premier endroit étant choisi en fonction desdits profils et d'éventuels encombrement et environnement dudit axe (AE), puis analyser avec chaque sonde (SU) une première portion choisie de ladite paroi (PA) dans un premier secteur angulaire choisi, orienté suivant un premier sens longitudinal ou transversal, de manière à acquérir des données d'analyse pour différentes positions angulaires relatives dudit axe (AE) par rapport à une sonde (SU),
b) replacer manuellement au moins une sonde (SU) en un deuxième endroit choisi en fonction des profils de la paroi (PA) et desdits éventuels encombrement et environnement de l'axe (AE), puis analyser avec chaque sonde (SU) replacée manuellement une deuxième portion choisie de ladite paroi (PA) dans un deuxième secteur angulaire choisi, orienté suivant un second sens opposé audit premier sens, de manière à acquérir d'autres données d'analyse pour différentes positions angulaires relatives dudit axe (AE) par rapport à une sonde (SU), et
c) constituer à partir desdites données d'analyse acquises des cartes représentatives des orientations transversales ou longitudinales et des positions d'indications d'échos au sein de ladite paroi (PA).

2. Procédé selon la revendication 1, **caractérisé en ce que** l'on effectue une première fois les étapes a) à c) en plaçant manuellement chaque sonde à ultrasons (SU) sur la surface externe (SE) de ladite paroi (PA) de manière à constituer des cartes représentatives des positions et orientations des indications d'échos au sein de ladite paroi (PA), puis on effectue une seconde fois au moins les étapes a) et c) en plaçant manuellement au moins une sonde à ultrasons (SU) sur la surface interne (SI) de ladite paroi (PA) en un troisième endroit, choisi en fonction de ses profils, puis en analysant avec chaque sonde (SU) une troisième portion choisie de ladite paroi (PA) dans un troisième secteur angulaire choisi, orienté suivant au moins un sens longitudinal ou transversal choisi, de manière à acquérir des données d'analyse pour différentes positions angulaires relatives dudit axe (AE) par rapport à une sonde (SU), et à constituer des cartes représentatives des positions et orientations des indications d'échos au sein de ladite paroi (PA).

3. Procédé selon l'une des revendications 1 et 2, **caractérisé en ce que** l'on effectue les étapes a) à c) au moins une fois en plaçant manuellement chaque sonde à ultrasons (SU) sur la surface externe (SE) ou interne (SI) de ladite paroi (PA) de manière à effectuer une analyse ultrasonore dans un secteur angulaire orienté suivant une direction longitudinale, et ainsi constituer des cartes représentatives des orientations transversales et des positions des indications d'échos au sein de ladite paroi (PA), puis on effectue de nouveau les étapes a) à c) encore au moins une fois en plaçant manuellement au moins une sonde à ultrasons (SU) sur la surface externe (SE) ou interne (SI) de ladite paroi (PA) de manière à effectuer une analyse ultrasonore dans un secteur angulaire orienté suivant une direction transversale et ainsi constituer des cartes représentatives des orientations longitudinales et des positions des indications d'échos au sein de ladite paroi (PA).

4. Procédé selon l'une des revendications 1 à 3, **caractérisé en ce qu'**après avoir effectué une étape c) on prévoit une étape d) dans laquelle on effectue une analyse d'au moins la surface externe (SE) de ladite paroi (PA), au moyen d'une autre technique d'analyse différente de celle basée sur les ultrasons, de manière à acquérir des données d'analyse pour différentes positions angulaires relatives d'au moins une sonde (SU) par rapport audit axe (AE), après avoir effectué une étape d), on prévoit une étape e) dans laquelle on constitue à partir de ces données d'analyse acquises des cartes représentatives des positions et orientations des indications de surface de ladite paroi (PA), ladite autre technique d'analyse est choisie dans un groupe comprenant la technique dite du flux de fuite et la technique dite des courants de Foucault, ou après avoir effectué une étape c) on prévoit une étape d) dans laquelle on effectue une analyse d'au moins la surface externe (SE) de ladite paroi (PA) au moyen d'une technique dite d'inspection avec des particules magnétisées (ou MPI), de manière à acquérir des données d'analyse de surface pour différentes positions angulaires relatives dudit axe (AE) par rapport à une sonde (SU).

5. Procédé selon l'une des revendications 1 à 4, **caractérisé en ce que** l'on analyse chacune des premières, deuxièmes et éventuelles troisièmes portions de ladite paroi au moyen d'un déplacement longitudinal d'au moins une sonde (SU) par rapport audit axe (AE) et/ou au moyen d'un balayage électronique avec au moins une sonde (SU), et à l'une au moins desdites étapes a), b) et d) on obtient les différentes positions angulaires relatives dudit axe (AE) par rapport à chaque sonde (SU) en entraînant en rotation manuellement chaque sonde (SU) par rapport audit axe (AE).

6. Procédé selon l'une des revendications 1 à 5, **caractérisé en ce qu'**il comprend une étape f) dans laquelle on compare les données des cartes obtenues lors d'une étape c) à des données de premières cartes étalons obtenues sur un premier axe étalon de même type que celui contrôlé, mais dépourvu de défauts, de manière à ne retenir que les données représentatives d'indications d'échos qui ne sont pas présentes dans lesdites premières cartes étalons et ainsi constituer des cartes corrigées, une étape g) dans laquelle on compare les données des cartes obtenues lors d'une étape c) ou f) à des données de secondes cartes étalons obtenues sur un second axe étalon de même type que celui contrôlé, mais comportant des défauts connus, de manière à ne retenir que les données représentatives d'indications d'échos représentatives de défauts connus présents dans lesdites secondes cartes étalons, et ainsi constituer des cartes de défauts, une étape h) dans laquelle on compare à une amplitude seuil choisie les amplitudes des données des cartes obtenues lors d'une étape c) ou f) de manière à ne retenir que des données représentatives d'indications d'échos dont les amplitudes sont supérieures à ladite amplitude seuil et signalent des défauts, et ainsi constituer des cartes de défauts, en cas de détection d'une amplitude supérieure à ladite amplitude seuil on génère une alarme, une étape i) dans laquelle on affiche au moins une carte sur un écran (EC).

7. Procédé selon l'une des revendications 1 à 6, **caractérisé en ce que** l'on utilise des sondes (SU) propres à émettre des ultrasons suivant une unique direction d'angle variable, ledit angle variant entre environ 0° et environ 70° par rapport à la direction longitudinale ou transversale.

8. Procédé selon l'une des revendications 1 à 7, **caractérisé en ce que** l'on utilise des sondes (SU) du type dit à réseau de phase, propres à émettre des ultrasons suivant des directions comprises dans un secteur angulaire choisi, ledit secteur angulaire étant compris entre environ 0° et environ 70° par rapport à la direction longitudinale ou transversale.

9. Appareil de contrôle d'axes d'essieu, **caractérisé en ce qu'**il comprend i) au moins une sonde à ultrasons (SU) agencée pour analyser dans un secteur angulaire choisi des portions choisies d'une paroi (PA), présentant des profils de rayons extérieur et intérieur variables et connus, d'un axe d'essieu tubulaire (AE), et ainsi acquérir des données d'analyse, ii) des moyens de contrôle (MC) agencés pour déterminer, en fonction desdits profils et d'éventuels encombrement et environnement dudit axe, au moins un premier et au moins un deuxième endroits choisis sur la surface externe (SE) ou interne (SI) de ladite paroi (PA) où doit être placée manuellement chaque sonde (SU) de sorte qu'elle analyse au moins une première et au moins une deuxième portions choisies de ladite paroi (PA) respectivement dans au moins un premier et au moins un deuxième secteurs angulaires choisis, orientés suivant des premier et second sens longitudinaux ou transversaux opposés, et qu'elle acquière ainsi des données d'analyse pour différentes positions angulaires relatives dudit axe (AE) par rapport à elle (SU), et iii) des moyens de traitement (MT) agencés pour constituer à partir desdites données d'analyse acquises des cartes représentatives des orientations transversales ou longitudinales et des positions d'indications d'échos au sein de ladite paroi (PA).

10. Appareil selon la revendication 9, **caractérisé en ce que** lesdits moyens de contrôle (MC) sont agencés pour déterminer un premier déplacement devant être appliqué manuellement à chaque sonde (SU) par rapport à la surface externe (SE) de ladite paroi (PA) de manière à acquérir des données d'analyse pour différentes positions angulaires relatives dudit axe (AE) par rapport à une sonde (SU), puis pour déterminer un second déplacement devant être appliqué manuellement à au moins une sonde (SU) par rapport à la surface interne (SI) de ladite paroi (PA) de sorte qu'elle analyse au moins une troisième portion choisie de ladite paroi (PA) dans au moins un troisième secteur angulaire choisi, orienté suivant un sens longitudinal ou transversal choisi et qu'elle acquière ainsi d'autres données d'analyse pour différentes positions angulaires relatives dudit axe (AE) par rapport à elle (SU), et **en ce que** lesdits moyens de traitement (MT) sont agencés pour constituer à partir desdites données d'analyse acquises des cartes représentatives des positions et orientations d'indications d'échos au sein de ladite paroi (PA).

11. Appareil selon l'une des revendications 9 et 10, **caractérisé en ce que** lesdits moyens de contrôle (MC) sont agencés i) pour déterminer un premier déplacement devant être appliqué manuellement à chaque sonde (SU) par rapport à la surface externe (SE) ou interne (SI) de ladite paroi (PA) de sorte qu'elle effectue une analyse ultrasonore dans un secteur angulaire orienté suivant une direction longitudinale, et qu'elle acquière des données d'analyse à partir desquelles lesdits moyens de traitement (MT) vont constituer des cartes représentatives des orientations transversales et des positions des indications d'échos, puis ii) pour déterminer au moins un second déplacement devant être appliqué manuellement à au moins une sonde (SU) par rapport à la surface externe (SE) ou interne (SI) de ladite paroi (PA) de sorte qu'elle effectue une analyse ultrasonore dans un secteur angulaire orienté suivant une direction transversale, et qu'elle acquière des données d'analyse à partir desquelles lesdits moyens de traitement (MT) vont constituer des cartes représentatives des orientations longitudinales et des positions des indications d'échos.

12. Appareil selon l'une des revendications 9 à 11, **caractérisé en ce qu'**il comprend des moyens d'analyse de surface agencés pour analyser au moins la surface externe (SE) de ladite paroi (PA), au moyen d'une autre technique d'analyse différente de celle basée sur les ultrasons, de manière à acquérir des données d'analyse pour différentes positions relatives dudit axe (AE) par rapport à chaque sonde (SU), lesdits moyens de traitement (MT) étant agencés pour constituer à partir desdites données d'analyse acquises par lesdits moyens d'analyse de surface (MAS) des cartes représentatives des positions et orientations des indications de surface de ladite paroi (PA), lesdits moyens d'analyse de surface étant choisis dans un groupe comprenant des moyens d'analyse de flux de fuite et des moyens d'analyse par courants de Foucault, des moyens d'analyse de surface agencés pour analyser au moins la surface externe (SE) de ladite paroi (PA) par inspection avec des particules magnétisées (ou MPI), de manière à acquérir des données d'analyse de surface pour différentes positions relatives dudit axe (AE) par rapport auxdites sondes (SU), lesdits moyens de contrôle (MC) étant agencés pour effectuer un balayage électronique avec au moins une sonde (SU) pour qu'elle analyse une partie au moins desdites premières, deuxièmes et éventuelles troisièmes portions de ladite paroi (PA), lesdits moyens de traitement (MT) étant agencés pour comparer les données de cartes obtenues sur ledit axe (AE) à contrôler à des données de premières cartes étalons obtenues sur un premier axe étalon de même type que celui contrôlé, mais dépourvu de défauts, et pour ne retenir que les données représentatives d'indications d'échos qui ne sont pas présentes dans lesdites premières cartes étalons et ainsi constituer des cartes corrigées, lesdits moyens de traitement (MT) étant agencés pour comparer les données de cartes obtenues sur ledit axe (AE) à contrôler à des données de secondes cartes étalons obtenues sur un second axe étalon de même type que celui contrôlé, mais comportant des défauts connus, et pour ne retenir que les données représentatives d'indications d'échos représentatives de défauts connus présents dans lesdites secondes cartes étalons, et ainsi constituer des cartes de défauts, et lesdits moyens de traitement (MT) étant agencés pour comparer à une amplitude seuil choisie les amplitudes des données de cartes obtenues sur ledit axe (AE) à contrôler, et pour ne retenir que des données représentatives d'indications d'échos dont les amplitudes sont supérieures à ladite amplitude seuil et signalent des défauts, et ainsi constituer des cartes de défauts, et pour générer une alarme en cas de détection d'une amplitude supérieure à ladite amplitude seuil.

13. Appareil selon l'une des revendications 9 à 12, **caractérisé en ce que** chaque sonde (SU) est propre à émettre des ultrasons suivant une unique direction d'angle variable, ledit angle variant entre environ 0° et environ 70° par rapport à la direction longitudinale ou transversale.

14. Appareil selon l'une des revendications 9 à 12, **caractérisé en ce que** chaque sonde (SU) est du type dit à réseau de phase et est propre à émettre des ultrasons suivant des directions comprises dans un secteur angulaire choisi.

15. Appareil selon la revendication 14, **caractérisé en ce que** ledit secteur angulaire est compris entre environ 0° et environ 70° par rapport à la direction longitudinale ou transversale.

## Patentansprüche

1. Verfahren zur Prüfung von Achsen mit Hilfe von Ultraschallsonden, **dadurch gekennzeichnet, dass** es die folgenden Schritte umfasst:
a) Manuelles Anordnen mindestens einer Ultraschallsonde (SU) an einer ersten Stelle, die auf der Außenoberfläche (SE) oder der Innenoberfläche (SI) einer Wandung (PA) einer Hohlachse (AE) ausgewählt wird, wobei die Wandung (PA) Profile mit bekanntem und variierendem Innenradius und Außenradius aufweist und wobei jede erste Stelle in Abhängigkeit von den Profilen und einem möglichen Platzbedarf und einer möglichen Umgebung der Achse (AE) ausgewählt wird, anschließend Analysieren eines ausgewählten ersten Bereichs der Wandung (PA) mit jeder Sonde (SU) in einem ausgewählten ersten Winkelsegment, das in einer ersten Längsrichtung oder Querrichtung orientiert ist, um Analysedaten für verschiedene relative Winkelpositionen der Achse (AE), bezogen auf eine Sonde (SU), zu erfassen,
b) erneutes manuelles Anordnen mindestens einer Sonde (SU) an einer zweiten Stelle, die in Abhängigkeit von den Profilen der Wandung (PA) und des möglichen Platzbedarfs und der möglichen Umgebung der Achse (AE) ausgewählt wird, anschließend Analysieren eines ausgewählten zweiten Bereichs der Wandung (PA) mit jeder manuell erneut angeordneten Sonde (SU) in einem ausgewählten zweiten Winkelsegment, das in einer zweiten Richtung orientiert ist, die zu der ersten Richtung entgegengesetzt ist, um weitere Analysedaten für verschiedene relative Winkelpositionen der Achse (AE), bezogen auf eine Sonde (SU), zu erfassen,
c) Erstellen von Karten anhand der erfassten Analysedaten, die charakteristisch für die Querorientierung oder Längsorientierung und die Position von Echoanzeigen innerhalb der Wandung (PA) sind.

2. Verfahren nach Anspruch 1, **dadurch gekennzeichnet, dass** die Schritte a) bis c) ein erstes Mal durchgeführt werden, indem jede Ultraschallsonde (SU) manuell auf der Außenoberfläche (SE) der Wandung (PA) angeordnet wird, um Karten zu erstellen, die charakteristisch für die Position und die Orientierung von Echoanzeigen innerhalb der Wandung (PA) sind, und dass dann mindestens die Schritte a) und c) ein zweites Mal durchgeführt werden, indem mindestens eine Ultraschallsonde (SU) manuell auf der Innenoberfläche (SI) der Wandung (PA) an einer dritten Stelle angeordnet wird, die in Abhängigkeit von ihren Profilen ausgewählt wird, und indem anschließend mit jeder Sonde (SU) ein ausgewählter dritter Bereich der Wandung (PA) in einem ausgewählten dritten Winkelsegment analysiert wird, das in mindestens einer ausgewählten Längs- oder Querrichtung orientiert ist, um Analysedaten für verschiedene relative Winkelpositionen der Achse (AE), bezogen auf eine Sonde (SU), zu erfassen und Karten zu erstellen, die charakteristisch für die Position und die Orientierung von Echoanzeigen innerhalb der Wandung (PA) sind.

3. Verfahren nach einem der Ansprüche 1 und 2, **dadurch gekennzeichnet, dass** die Schritte a) bis c) mindestens einmal durchgeführt werden, indem jede Ultraschallsonde (SU) manuell auf der Außenoberfläche (SE) oder der Innenoberfläche (SI) der Wandung (PA) angeordnet wird, um eine Ultraschallanalyse in einem Winkelsegment durchzuführen, das in einer Längsrichtung orientiert ist, und so Karten zu erstellen, die charakteristisch für die Querorientierung und die Position von Echoanzeigen innerhalb der Wandung (PA) sind, und dass dann die Schritte a) bis c) mindestens noch einmal durchgeführt werden, indem mindestens eine Ultraschallsonde (SU) manuell auf der Außenoberfläche (SE) oder der Innenoberfläche (SI) der Wandung (PA) angeordnet wird, um eine Ultraschallanalyse in einem Winkelsegment durchzuführen, das in einer Querrichtung orientiert ist, und so Karten zu erstellen, die charakteristisch für die Längsorientierung und die Position von Echoanzeigen innerhalb der Wandung (PA) sind.

4. Verfahren nach einem der Ansprüche 1 bis 3, **dadurch gekennzeichnet, dass**, nachdem ein Schritt c) durchgeführt wurde, ein Schritt d) vorgesehen wird, in dem eine Analyse mindestens der Außenoberfläche (SE) der Wandung (PA) mit Hilfe einer anderen Analysetechnik durchgeführt wird, die verschieden von der Analysetechnik auf Ultraschallbasis ist, um Analysedaten für verschiedene relative Winkelpositionen mindestens einer Sonde (SU), bezogen auf die Achse (AE), zu erfassen, dass, nachdem Schritt d) durchgeführt wurde, ein Schritt e) vorgesehen wird, in dem anhand dieser erfassten Analysedaten Karten erstellt werden, die charakteristisch für die Position und die Orientierung von Anzeigen der Oberfläche der Wandung (PA) sind, wobei die andere Analysetechnik aus einer Gruppe ausgewählt wird, die die Streuflussprüfung und die Wirbelstromprüfung umfasst, oder dass, nachdem Schritt c) durchgeführt wurde, ein Schritt d) vorgesehen wird, in dem eine Analyse mindestens der Außenoberfläche (SE) der Wandung (PA) mit Hilfe einer Technik durchgeführt wird, die als Untersuchung mit magnetisierten Partikeln (oder Magnetpulverprüfung MPI) bezeichnet wird, um Analysedaten der Oberfläche für verschiedene relative Winkelpositionen der Achse (AE), bezogen auf eine Sonde (SU), zu erfassen.

5. Verfahren nach einem der Ansprüche 1 bis 4, **dadurch gekennzeichnet, dass** sowohl der erste als auch der zweite und gegebenenfalls der dritte Bereich der Wandung mit Hilfe einer Längsverschiebung mindestens eine Sonde (SU), bezogen auf die Achse (AE), und/oder mit Hilfe einer elektronischen Abtastung mit mindestens einer Sonde (SU) analysiert wird, und dass bei mindestens einem der Schritte a), b) und d) die verschiedenen relativen Winkelpositionen der Achse (AE), bezogen auf jede Sonde (SU), erhalten werden, indem jede Sonde (SU), bezogen auf die Achse (AE), manuell in Rotation versetzt wird.

6. Verfahren nach einem der Ansprüche 1 bis 5, **dadurch gekennzeichnet, dass** es umfasst: einen Schritt f), in dem die Daten der Karten, die in einem Schritt c) erhalten wurden, mit den Daten erster Eichkarten verglichen werden, die für eine erste Eichachse vom gleichen Typ wie die Achse, die geprüft wird, die jedoch frei von Fehlern ist, erhalten wurden, um ausschließlich die Daten zu behalten, die charakteristisch für Echoanzeigen sind, die in den ersten Eichkarten nicht vorhanden sind, und um so korrigierte Karten zu erstellen, einen Schritt g), in dem die Daten der Karten, die in einem Schritt c) oder f) erhalten wurden, mit den Daten zweiter Eichkarten verglichen werden, die für eine zweite Eichachse vom gleichen Typ wie die Achse, die geprüft wird, die jedoch bekannte Fehler aufweist, erhalten wurden, um ausschließlich die Daten zu behalten, die charakteristisch für Echoanzeigen sind, die charakteristisch für bekannte Fehler sind, die in den zweiten Eichkarten vorhanden sind, und um so Karten der Fehler zu erstellen, einen Schritt h), in dem die Amplituden der Daten der Karten, die in einem Schritt c) oder f) erhalten wurden, mit einer ausgewählten Schwellenamplitude verglichen werden, um ausschließlich die Daten zu behalten, die charakteristisch für Echoanzeigen sind, deren Amplituden größer als die Schwellenamplitude sind und Fehler signalisieren, und um so Karten der Fehler zu erstellen, und in dem im Fall des Nachweises einer Amplitude größer als die Schwellenamplitude ein Alarm erzeugt wird, und einen Schritt i), in dem mindestens eine Karte auf einem Bildschirm (EC) angezeigt wird.

7. Verfahren nach einem der Ansprüche 1 bis 6, **dadurch gekennzeichnet, dass** Sonden (SU) verwendet werden, die dafür geeignet sind, Ultraschall in einer einzigen Richtung mit variablem Winkel zu emittieren, wobei der Winkel im Bereich von etwa 0° bis etwa 70°, bezogen auf die Längsrichtung oder die Querrichtung, variiert.

8. Verfahren nach einem der Ansprüche 1 bis 7, **dadurch gekennzeichnet, dass** Sonden (SU) vom Typ der Phased-Array-Sonden verwendet werden, die dafür geeignet sind, Ultraschall in Richtungen zu emittieren, die in einem ausgewählten Winkelsegment liegen, wobei das Winkelsegment im Bereich von etwa 0° bis etwa 70°, bezogen auf die Längsrichtung oder die Querrichtung, liegt.

9. Vorrichtung für die Prüfung von Achsen, **dadurch gekennzeichnet, dass** sie umfasst: i) mindestens eine Ultraschallsonde (SU), die eingerichtet ist für die Analyse ausgewählter Bereiche einer Wandung (PA), die Profile mit bekanntem und variierendem Außenradius und Innenradius aufweist, einer Hohlachse (AE) in einem ausgewählten Winkelsegment und somit für die Erfassung von Analysedaten, ii) eine Steuerungseinrichtung (MC), die dafür eingerichtet ist, in Abhängigkeit von den Profilen und eines möglichen Platzbedarfs und einer möglichen Umgebung der Achse mindestens eine erste Stelle und mindestens eine zweite Stelle, die auf der Außenoberfläche (SE) oder der Innenoberfläche (SI) der Wandung (PA) ausgewählt werden, zu bestimmen, an denen jede Sonde (SU) manuell angeordnet werden soll, damit sie mindestens einen ausgewählten ersten Bereich und mindestens einen ausgewählten zweiten Bereich in mindestens einem ausgewählten ersten Winkelsegment und einem ausgewählten zweiten Winkelsegment analysiert, die in einer ersten Längs- oder Querrichtung und einer zweiten Längs- oder Querrichtung orientiert sind, die einander entgegengesetzt sind, und damit sie so Analysedaten für verschiedene relative Winkelpositionen der Achse (AE), bezogen auf sie (SU), erfasst, und iii) eine Verarbeitungseinrichtung (MT), die dafür eingerichtet ist, aus diesen erfassten Analysedaten Karten zu erstellen, die für die Quer- oder Längsorientierung und die Position von Echoanzeigen innerhalb der Wandung (PA) charakteristisch sind.

10. Vorrichtung nach Anspruch 9, **dadurch gekennzeichnet, dass** die Steuerungseinrichtung (MC) eingerichtet ist für die Bestimmung einer ersten Verschiebung, die manuell mit jeder Sonde (SU) durchgeführt werden muss, bezogen auf die Außenoberfläche (SE) der Wandung (PA), um Analysedaten für verschiedene relative Winkelpositionen der Achse (AE), bezogen auf eine Sonde (SU), zu erfassen, dann für die Bestimmung einer zweiten Verschiebung, die manuell mit mindestens einer Sonde (SU), bezogen auf die Innenoberfläche (SI) der Wandung (PA), durchgeführt werden muss, damit sie mindestens einen ausgewählten dritten Bereich der Wandung (PA) in mindestens einem ausgewählten dritten Winkelsegment analysiert, das in einer ausgewählten Längsoder Querrichtung orientiert ist, und damit sie so weitere Analysedaten für verschiedene relative Winkelpositionen der Achse (AE), bezogen auf sie (SU), erfasst, und dass die Verarbeitungseinrichtung (MT) dafür eingerichtet ist, aus den erfassten Analysedaten Karten zu erstellen, die charakteristisch für die Position und die Orientierung von Echoanzeigen innerhalb der Wandung (PA) sind.

11. Vorrichtung nach einem der Ansprüche 9 und 10, **dadurch gekennzeichnet, dass** die Steuerungseinrichtung (MC) eingerichtet ist i) für die Bestimmung einer ersten Verschiebung, die manuell mit jeder Sonde (SU) durchgeführt werden muss, bezogen auf die Außenoberfläche (SE) oder die Innenoberfläche (SI) der Wandung (PA), damit sie eine Ultraschallanalyse in einem Winkelsegment durchführt, das in einer Längsrichtung orientiert ist, und damit sie Analysedaten gewinnt, mit denen die Verarbeitungseinrichtung (MT) Karten erstellt, die charakteristisch für die Querorientierung und die Position von Echoanzeigen sind, und dann ii) für die Bestimmung mindestens einer zweiten Verschiebung, die manuell mit mindestens einer Sonde (SU) durchgeführten werden muss, bezogen auf die Außenoberfläche (SE) oder die Innenoberfläche (SI) der Wandung (PA), damit sie eine Ultraschallanalyse in einem Winkelsegment durchführt, das in einer Querrichtung orientiert ist, und damit sie Analysedaten gewinnt, mit denen die Verarbeitungseinrichtung (MT) Karten erstellt, die charakteristisch für die Längsorientierung und die Position von Echoanzeigen sind.

12. Vorrichtung nach einem der Ansprüche 9 bis 11, **dadurch gekennzeichnet, dass** sie umfasst: eine Einrichtung zur Oberflächenanalyse, die eingerichtet ist für die Analyse mindestens der Außenoberfläche (SE) der Wandung (PA) mit Hilfe einer anderen Analysetechnik, die verschieden von der Analysetechnik auf Ultraschallbasis ist, um Analysedaten für verschiedene relative Positionen der Achse (AE), bezogen auf eine Sonde (SU), zu erfassen, wobei die Verarbeitungseinrichtung (MT) dafür eingerichtet ist, anhand der Analysedaten, die mit der Einrichtung zur Oberflächenanalyse (MAS) erfasst werden, Karten zu erstellen, die charakteristisch für die Position und die Orientierung von Oberflächenanzeigen der Wandung (PA) sind, wobei die Einrichtung zur Oberflächenanalyse aus einer Gruppe ausgewählt ist, die eine Einrichtung zur Streuflussprüfung und eine Einrichtung zur Wirbelstromprüfung, eine Einrichtung zur Oberflächenanalyse, die dafür eingerichtet ist, mindestens die äußere Oberfläche (SE) der Wandung (PA) durch Untersuchung mit magnetisierten Partikeln (oder MPI) zu analysieren, umfasst, um Analysedaten der Oberfläche für verschiedenen relative Positionen der Achse (AE), bezogen auf die Sonden (SU), zu erfassen, wobei die Steuerungseinrichtung (MC) für die Durchführung einer elektronischen Abtastung mit mindestens einer Sonde (SU) eingerichtet ist, damit sie einen Teil mindestens des ersten, des zweiten und gegebenenfalls des dritten Bereichs der Wandung (PA) analysiert, wobei die Verarbeitungseinrichtung (MT) dafür eingerichtet ist, die Daten der Karten, die auf der zu prüfenden Achse (AE) erhalten werden, mit den Daten erster Eichkarten zu vergleichen, die auf einer ersten Eichachse vom gleichen Typ wie die geprüfte Achse, die jedoch frei von Fehlern ist, erhalten werden, und nur die Daten zu behalten, die repräsentativ für Echoanzeichen sind, die in den ersten Eichkarten nicht vorhanden sind und so korrigierte Karten zu erstellen, wobei die Verarbeitungseinrichtung (MT) dafür eingerichtet ist, die Daten der Karten, die auf der zu prüfenden Achse (AE) erhalten werden, mit den Daten zweiter Eichkarten zu vergleichen, die auf einer zweiten Eichachse vom gleichen Typ wie die geprüfte Achse, die jedoch die bekannten Fehler aufweist, erhalten werden, und nur die Daten zu behalten, die charakteristisch für Echoanzeichen sind, die charakteristisch für bekannte Fehler sind, die in den zweiten Eichkarten vorhanden sind, und so Karten von Fehlern zu erstellen, und wobei die Verarbeitungseinrichtung (MT) dafür eingerichtet ist, die Amplituden der auf der zu prüfenden Achse (AE) erhaltenen Daten der Karten mit einer Schwellenamplitude zu vergleichen und nur die Daten zu behalten, die charakteristisch für Echoanzeichen sind, deren Amplituden größer als die Schwellenamplitude sind und die Fehler anzeigen und so Karten der Fehler zu erstellen, und ein Warnsignal im Fall des Nachweises einer Amplitude größer als die Schwellenamplitude zu erzeugen.

13. Vorrichtung nach einem der Ansprüche 9 bis 12, **dadurch gekennzeichnet, dass** jede Sonde (SU) dafür geeignet ist, Ultraschall in einer einzigen Richtung mit variablem Winkel zu emittieren, wobei der Winkel im Bereich von etwa 0° bis etwa 70°, bezogen auf die Längsrichtung oder die Querrichtung, variiert.

14. Vorrichtung nach einem der Ansprüche 9 bis 12, **dadurch gekennzeichnet, dass** jede Sonde (SU) eine Sonde vom Typ der Phased-Array-Sonden ist und dafür geeignet ist, Ultraschall in Richtungen zu emittieren, die in einem ausgewählten Winkelsegment liegen.

15. Vorrichtung nach Anspruch 14, **dadurch gekennzeichnet, dass** das Winkelsegment im Bereich von etwa 0° bis etwa 70°, bezogen auf die Längsrichtung oder die Querrichtung, liegt.

## Claims

1. Method for testing axle shafts using ultrasonic probes, **characterised in that** it comprises the following steps:
a) placing manually at least one ultrasonic probe (SU) in a first site which is selected on the external (SE) or internal (SI) surface of a wall (PA) of a tubular axle shaft (AE), said wall (PA) exhibiting known variable internal and external radius profiles, and each first site being selected as a function of said profiles and a possible loading and environment of said shaft (AE), then analysing with each probe (SU) a first selected portion of said wall (PA) in a first selected angular sector oriented in a first longitudinal or transverse direction, so as to acquire analysis data for various relative angular positions of said shaft (AE) in relation to a probe (SU),
b) manually relocating at least one probe (SU) in one second site selected as a function of the profiles of the wall (PA) and said possible loading and environment of the shaft (AE), then analysing with each probe (SU) relocated manually a second selected portion of said wall (PA) in a second selected angular sector oriented in a second direction opposite to said first direction, so as to acquire other analysis data for various relative angular positions of said shaft (AE) in relation to a probe (SU),
c) creating from said acquired analysis data maps representing the transverse or longitudinal orientations and the positions of indications of echoes within said wall (PA).

2. Method according to claim 1, **characterised in that** steps a) to c) are carried out a first time by placing manually each ultrasonic probe (SU) on the external surface (SE) of said wall (PA) so as to create maps representing the positions and orientations of the indications of echoes within said wall (PA), then at least steps a) and c) are carried out a second time by placing manually at least one ultrasonic probe (SU) on the internal surface (SI) of said wall (PA) in one third site selected as a function of its profiles, then analysing with each probe (SU) a third selected portion of said wall (PA) in a third selected angular sector oriented in at least one selected longitudinal or transverse direction, so as to acquire analysis data for various relative angular positions of said shaft (AE) in relation to a probe (SU), and to create maps representing the positions and orientations of the indications of echoes within said wall (PA).

3. Method according to one of claims 1 and 2, **characterised in that** steps a) to c) are carried out at least once by placing manually each ultrasonic probe (SU) on the external (SE) or internal surface (SI) of said wall (PA) so as to carry out an ultrasonic analysis in an angular sector oriented in a longitudinal direction, and thus create maps representing the transverse orientations and the positions of the indications of echoes within said wall (PA), then steps a) to c) are carried out again at least once by placing manually at least one ultrasonic probe (SU) on the external (SE) or internal (SI) surface of said wall (PA) so as to carry out an ultrasonic analysis in an angular sector oriented in a transverse direction and thus create maps representing the longitudinal orientations and the positions of the indications of echoes within said wall (PA).

4. Method according to any one of claims 1 to 3, **characterised in that** after having performed a step c), a step d) is provided in which an analysis of at least the external surface (SE) of said wall (PA) is carried out using another analysis technique different from that based on ultrasound, so as to acquire analysis data for various relative angular positions of at least one probe (SU) in relation to said shaft (AE), after having performed a step d) a step e) is carried out in which maps are created from these acquired analysis data representing the positions and orientations of the surface indications of said wall (PA), said other analysis technique is selected from a group comprising the so-called flux leakage technique and the so-called eddy current technique, or after having performed a step c) a step d) is carried out in which an analysis is performed of at least the external surface (SE) of said wall (PA) by means of a so-called magnetic particle inspection (MPI) technique so as to acquire surface analysis data for various relative angular positions of said shaft (AE) in relation to a probe (SU).

5. Method according to any one of claims 1 to 4, **characterised in that** each of the first, second and possibly third portions of said wall is analysed by means of a longitudinal displacement of at least one probe (SU) in relation to said shaft (AE) and/or by means of electronic scanning with at least one probe (SU), and in at least one of said steps a), b) and d), the various relative angular positions of said shaft (AE) in relation to each probe (SU) are obtained by manually driving each probe (SU) in rotation in relation to said shaft (AE).

6. Method according to any one of claims 1 to 5, **characterised in that** it comprises a step f) in which the map data obtained during a step c) are compared with first reference map data obtained on a first reference shaft of the same type as that tested but free from defects, so as to select only the data which are representative of indications of echoes not shown on said first reference maps and thus create corrected maps, a step g) in which the map data obtained during a step c) or f) are compared with second reference map data obtained on a second reference shaft of the same type as that tested but comprising known defects, so as to select only the data which are representative of indications of echoes representative of known defects shown on said second reference maps, and thus create defect maps, a step h) in which the amplitudes of the map data obtained during a step c) or f) are compared with a selected threshold amplitude so as to select only the data which are representative of indications of echoes with amplitudes higher than said threshold amplitude which signal defects, and thus create defect maps, in the event of detection of an amplitude higher than said threshold amplitude, an alarm is generated, a step i) in which at least one map is displayed on a screen (EC).

7. Method according to any one of claims 1 to 6, **characterised in that** probes (SU) are used which are capable of emitting ultrasound in a single variable angle direction, said angle varying between approximately 0° and approximately 70° in relation to the longitudinal or transverse direction.

8. Method according to any one of claims 1 to 7, **characterised in that** so-called phased array type probes (SU) are used which are capable of emitting ultrasound in directions lying in a selected angular sector, said angular sector being between approximately 0° and approximately 70° in relation to the longitudinal or transverse direction.

9. Apparatus for testing axle shafts, **characterised in that** it comprises i) at least one ultrasonic probe (SU) arranged to analyse, in a selected angular sector, selected portions of a wall (PA), exhibiting known variable internal and external radius profiles, of a tubular axle shaft (AE), and thus acquire analysis data, ii) control means (MC) arranged to determine, as a function of said profiles and the possible loading and environment of said shaft, at least one first and at least one second site selected on the external (SE) or internal (SI) surface of said wall (PA) where each probe (SU) is to be placed manually, such that it analyses at least one first and at least one second selected portion of said wall (PA) respectively in at least one first and at least one second selected angular sector oriented in the first and second opposing longitudinal or transverse directions, and thus acquires analysis data for various relative angular positions of said shaft (AE) in relation to said probe (SU), and iii) processing means (MT) arranged to create from said acquired analysis data maps representing the transverse or longitudinal orientations and the positions of indications of echoes within said wall (PA).

10. Apparatus according to claim 9, **characterised in that** said control means (MC) are arranged to determine a first displacement to be applied manually to each probe (SU) in relation to the external surface (SE) of said wall (PA) such that it acquires analysis data for various relative angular positions of said shaft (AE) in relation to a probe (SU), then to determine a second displacement to be applied manually to at least one probe (SU) in relation to the internal surface (SI) of said wall (PA) such that it analyses at least one third selected portion of said wall (PA) in at least one third selected angular sector oriented in a selected longitudinal or transverse direction and such that it thus acquires other analysis data for various relative angular positions of said shaft (AE) in relation to said probe (SU), and **in that** said processing means (MT) are arranged to create from said acquired analysis data maps representing the positions and orientations of indications of echoes within said wall (PA).

11. Apparatus according to one of claims 9 and 10, **characterised in that** said control means (MC) are arranged i) to determine a first displacement to be applied manually to each probe (SU) in relation to the external (SE) or internal (SI) surface of said wall (PA) such that it carries out an ultrasonic analysis in an angular sector oriented in a longitudinal direction, and such that it acquires analysis data from which said processing means (MT) will create maps representing the transverse orientations and the positions of the indications of echoes, then ii) to determine a second displacement to be applied manually to at least one probe (SU) in relation to the external (SE) or internal (SI) surface of said wall (PA) such that it carries out an ultrasonic analysis in an angular sector oriented in a transverse direction, and such that it acquires analysis data from which said processing means (MT) will create maps representing the longitudinal orientations and the positions of the indications of echoes.

12. Apparatus according to one of claims 9 to 11, **characterised in that** it comprises surface analysis means arranged to analyse at least the external surface (SE) of said wall (PA) by means of another analysis technique different from that based on ultrasound, so as to acquire analysis data for various relative positions of said shaft (AE) in relation to each probe (SU), said processing means (MT) being arranged to create from said analysis data acquired through said surface analysis means (MAS) maps representing the positions and orientations of the surface indications of said wall (PA), said surface analysis means being selected from a group comprising flux leakage analysis means and eddy current analysis means, surface analysis means arranged to analyse at least the external surface (SE) of said wall (PA) by magnetic particle inspection (MPI) so as to acquire surface analysis data for various relative positions of said shaft (AE) in relation to said probes (SU), said control means (MC) being arranged to perform an electronic scan with at least one probe (SU) so that it analyses at least a part of said first, second and where applicable third portions of said wall (PA), said processing means (MT) being arranged to compare the map data obtained on said shaft (AE) to be tested with the first reference map data obtained on a first reference shaft of the same type as that tested but free from defects, and to select only the data which are representative of indications of echoes not shown on said first reference maps and thus create corrected maps, said processing means (MT) being arranged to compare the map data obtained on said shaft (AE) to be tested with the second reference map data obtained on a second reference shaft of the same type as that tested but comprising known defects, and to select only the data which are representative of indications of echoes representing known defects shown on said second reference maps, and thus create defect maps, and said processing means (MT) being arranged to compare the amplitudes of the map data obtained on said shaft (AE) to be tested with a selected threshold amplitude, and to select only the data which are representative of indications of echoes with amplitudes higher than said threshold amplitude which signal defects, and thus create defect maps, and to generate an alarm in the event of detection of an amplitude higher than said threshold amplitude.

13. Apparatus according to any one of claims 9 to 12, **characterised in that** each probe (SU) is capable of emitting ultrasound in a single variable angle direction, said angle varying between approximately 0° and approximately 70° in relation to the longitudinal or transverse direction.

14. Apparatus according to any one of claims 9 to 12, **characterised in that** each probe (SU) is of the so-called phased array type and is capable of emitting ultrasound in directions lying in a selected angular sector.

15. Apparatus according to claim 14, **characterised in that** said angular sector is between approximately 0° and approximately 70° in relation to the longitudinal or transverse direction.
